(19) Europäisches Patentamt
European Patent Office
Office européen des brevets

(11) **EP 2 518 688 A1**

(12) **EUROPEAN PATENT APPLICATION**
published in accordance with Art. 153(4) EPC

(43) Date of publication:
**31.10.2012 Bulletin 2012/44**

(51) Int Cl.:
***G06T 7/00*** *(2006.01)* ***H04N 5/262*** *(2006.01)*

(21) Application number: **10838667.3**

(86) International application number:
**PCT/CN2010/080053**

(22) Date of filing: **21.12.2010**

(87) International publication number:
**WO 2011/076104 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2009 CN 200910247061**

(71) Applicant: **Huawei Device Co., Ltd.**
**Longgang District**
**Shenzhen**
**Guangdong 518129 (CN)**

(72) Inventor: **LI, Kai**
**Shenzhen**
**Guangdong 518129 (CN)**

(74) Representative: **Lord, Michael et al**
**Gill Jennings & Every LLP**
**The Broadgate Tower**
**20 Primrose Street**
**London EC2A 2ES (GB)**

(54) **METHOD AND DEVICE FOR SPLICING IMAGES**

(57) The present invention discloses an image splicing method and apparatus, and relates to the field of image processing technologies, so that a problem that in the prior art, an overlapped area between images is required or a video sequence is required when a homography matrix is calculated is solved. In embodiments of the present invention, first, a spatial relationship parameter between two scenes is determined; a spatial relationship parameter between two cameras that photograph the two scenes respectively, and internal parameters of the two cameras are obtained; and then, an operation is performed on the spatial relationship parameter between the two scenes, the spatial relationship parameter between the cameras, and the internal parameters of the cameras to obtain a homography matrix between photographed images; and according to the homography matrix, the images photographed by the two cameras are mapped to the same coordinate system to splice the images into one image. The embodiments of the present invention are mainly applied to calculation of a homography matrix between two images, especially to calculation of a homography matrix in an image splicing process.

Determine a spatial relationship parameter between two scenes — 201

Obtain a spatial relationship parameter between two cameras that photograph the two scenes respectively, and internal parameters of the two cameras — 202

Perform an operation on the spatial relationship parameter between the two scenes, the spatial relationship parameter between the cameras, and the internal parameters of the cameras to obtain a homography matrix between photographed images — 203

FIG. 2

**Description**

This application claims priority to Chinese Patent Application No. 200910247061.7, filed with Chinese Patent Office on December 21, 2009 and entitled "IMAGE SPLICING METHOD AND APPARATUS", which is incorporated herein by reference in its entirety.

**FIELD OF THE INVENTION**

The present invention relates to the field of image processing technologies, and in particular, to an image splicing method and apparatus.

**BACKGROUND OF THE INVENTION**

A seamless wide-angle image can be directly constructed through hardware devices such as a reflection/ refraction system and a fisheye lens. However, these hardware devices capture as much information as possible on a limited imaging surface, which causes serious distortion of the constructed seamless wide-angle image.
An image in a digital format may be photographed through a digital imaging device, and a digital panoramic image with a wider field of view may be obtained by splicing multiple digital images. In addition, a finally-obtained digital panoramic image has smaller distortion. The splicing of images mainly includes the following steps: image obtaining, image preprocessing, image registration, image re-projection, and image fusion.
Image registration is a critical step in image splicing. An overlapped area on different two-dimensional images that are formed from different viewpoints needs to be found in a scene, and a point-to-point mapping relationship on the overlapped area is calculated, or a correlation is established for a certain interesting feature. This mapping relationship is usually referred to as "homography transformation" (Homography). The mapping relationship is generally represented by a homography matrix, and the mapping relationship is mainly manifested in the form of translation, rotation, affine, and projection.
At present, in an image splicing technology, a calculating manner for a widely-applied homography matrix is as follows:
Overlapped pixel points between images that need to be spliced are obtained by detecting a feature point, for example, a SIFT (Scale-Invariant Features: scale-invariant features) feature point detection method, a Harris feature point detection method, a Susan feature point detection method, a stereoscopic image matching method, or other feature point detection methods; and then a homography matrix that represents a mapping relationship between the overlapped pixel points is calculated through estimation of a linear or nonlinear homography matrix.
In a process of applying the foregoing solution, the inventor of the present invention finds that: A corresponding homography matrix can be calculated only when a lager overlapped area exists between the foregoing images that need to be spliced; and a homography matrix cannot be calculated for images without an overlapped area or images with only one column of overlapped pixels, so that images cannot be spliced.

**SUMMARY OF THE INVENTION**

Embodiments of the present invention provide an image splicing method and apparatus, so that a homography matrix is calculated or image splicing is accomplished in the case of no overlapped area between two images or only one column of overlapped pixels between two images.
To achieve the foregoing objective, the embodiments of the present invention adopt the following technical solutions:
An image splicing method includes:

determining a spatial relationship parameter between two scenes;
obtaining a spatial relationship parameter between two cameras that photograph the two scenes respectively, and internal parameters of the two cameras;
performing an operation on the spatial relationship parameter between the two scenes, the spatial relationship parameter between the cameras, and the internal parameters of the cameras to obtain a homography matrix between photographed images; and
according to the homography matrix, mapping the images photographed by the two cameras to the same coordinate system to splice the images into one image.

An image splicing apparatus includes:

a determining unit, configured to determine a spatial relationship parameter between two scenes;
an obtaining unit, configured to obtain a spatial relationship parameter between two cameras that photograph the two scenes respectively, and internal parameters of the two cameras;
an operation unit, configured to perform an operation on the spatial relationship parameter between the two scenes, the spatial relationship parameter between the cameras, and the internal parameters of the cameras to obtain a homography matrix between photographed images; and
a mapping unit, configured to map, according to the homography matrix, the images photographed by the two cameras to the same coordinate system to splice the images into one image.

With the image splicing method and apparatus that are provided in the embodiments of the present invention, it can be known from the foregoing description that, in the embodiments of the present invention, when a homography matrix is calculated, no overlapped area is required between two images, neither a video sequence needs to be used. The homography matrix may be directly calculated through a spatial relationship parameter between two scenes, a spatial relationship parameter between cameras, and internal parameters of the cameras.

The homography matrix may be directly calculated through the spatial relationship parameter between two scenes, the spatial relationship parameter between the cameras, and the internal parameters of the cameras. In this way, no overlapped area between images is required when the homography matrix is calculated, that is to say, in the embodiments of the present invention, the homography matrix is calculated in the case of no overlapped area between two images or only one column of overlapped pixels between two images, and the image splicing is accomplished by using the homography matrix.

## BRIEF DESCRIPTION OF THE DRAWINGS

To describe the technical solutions in embodiments of the present invention or in the prior art clearly, the accompanying drawings required for describing the embodiments or the prior art are introduced briefly in the following. Apparently, the accompanying drawings in the following description are only some embodiments of the present invention, and persons of ordinary skill in the art may still derive other drawings from these accompanying drawings without creative efforts.

FIG. 1 is a relation diagram of calculating a homography matrix according to the prior art in the present invention;

FIG. 2 is a flow chart of calculating a homography matrix according to a first embodiment of the present invention;

FIG. 3 is a block diagram of an apparatus for calculating a homography matrix according to the first embodiment of the present invention;

FIG. 4 is a flow chart of an image splicing method according to the first embodiment of the present invention;

FIG. 5 is a block diagram of an image splicing apparatus according to the first embodiment of the present invention;

FIG. 6 shows a checkerboard according to a second embodiment of the present invention;

FIG. 7 is a schematic diagram of a first image before image splicing according to the second embodiment of the present invention;

FIG. 8 is a schematic diagram of an image after splicing according to the second embodiment of the present invention;

FIG. 9 is a schematic diagram of a seam line after splicing according to the second embodiment of the present invention;

FIG. 10 is a schematic diagram of fusing the seam line according to the second embodiment of the present invention;

FIG. 11 is another schematic diagram of fusing the seam line according to the second embodiment of the present invention;

FIG. 12 is a schematic diagram of polar points and polar lines in a binocular vision system according to a third embodiment of the present invention;

FIG. 13 is a block diagram of an apparatus for calculating a homography matrix according to a fifth embodiment of the present invention;

FIG. 14 is a block diagram of an image splicing apparatus according to the fifth embodiment of the present invention.

## DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. Based on the embodiments of the present invention, all other embodiments obtained by persons skilled in the art without creative efforts shall all fall within the protection scope of the present invention.

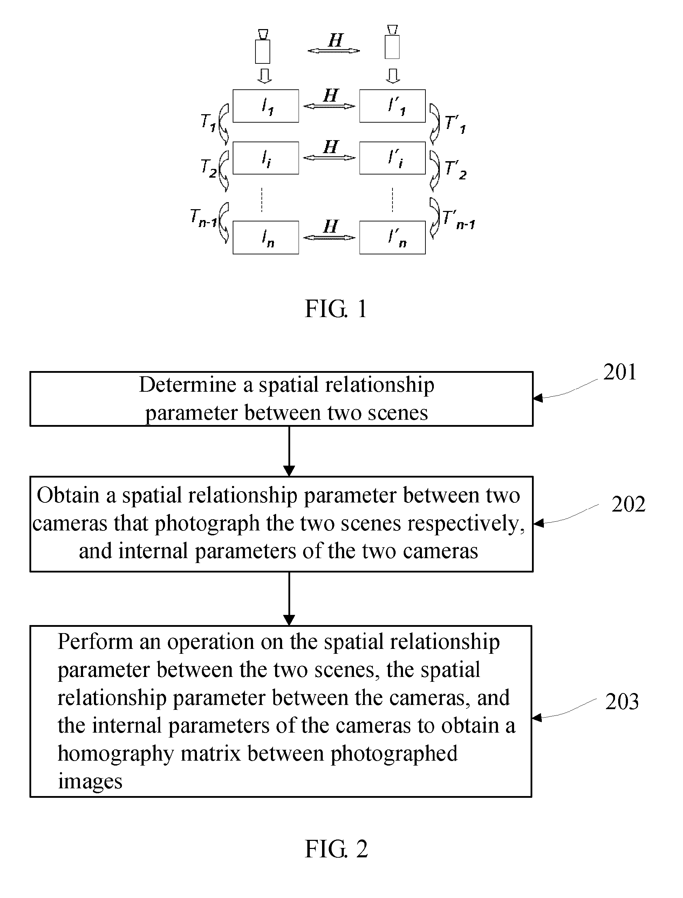

When image splicing is performed, if there is no overlapped area or only one column of overlapped pixels between images, a homography matrix H may be calculated through a formula $s_iHT_i - T'_i H = 0$, and then the image splicing is performed by using H. A derivation principle of the formula is described in the following: As shown in FIG. 1, H is a homography matrix that represents a mapping relationship between images photographed by adjacent cameras, and $T_i$ and $T_i'$ are transformation relationships between adjacent frames in a video sequence of the same camera respectively. It is assumed that P is a point in a 3D scene. An image coordinate to which P corresponds is $p_i$ in a frame $I_i$, an image coordinate to which P corresponds is $p_i^{/}$ in a synchronous *frame* $I_i^{/}$, an image coordinate to which P corresponds is $p_{i+}1$ in a frame $I_{i+1}$, and an image coordinate to which P corresponds is $p_{i+1}^{/}$ in a frame $I_{i+1}^{/}$.

Then:

$$\begin{cases} p_{i+1} \cong T_i\, p_i \\ p'_{i+1} \cong T'_i\ p'_i \end{cases}$$

Video sequences of two cameras have a fixed homography matrix transformation relationship, and therefore:

$$\begin{cases} p_i^{/} \cong Hp_i \\ p_{i+1}^{/} \cong Hp_{i+1} \Rightarrow HT_i p_i \cong Hp_{i+1} \cong p_{i+1}^{/} \cong T'_i\ p_i^{/} \cong T'_i\, Hp_i \Rightarrow HT_i \cong T'_i\, H \end{cases}$$

Because H is irreversible, $T'_i = s_iHT_iH^{-1}$ may be derived.

It can be known from an eigenvalue relationship in advanced algebra that:

$eig(T'_i) = eig(s_iHT_iH^{-1}) = eig(s_iT_i) = s_ieig(T_i)$ . Accordingly, s may be calculated out; and

$T_i$ and $T'_i$ are easy to be calculated out, and therefore, H may be calculated out through the formula $s_iHT_i - T'_iH = 0.$

The foregoing calculating manner is merely one calculating manner of the homography matrix to perform image splicing. Other manners may also be adopted when images without an overlapped area or with only one column of overlapped pixels are spliced.

**Embodiment 1**

If two cameras photograph two scenes respectively to obtain images of the two scenes, or one camera photographs two scenes separately to obtain images of the two scenes, in order to splice the obtained images of the two scenes together, a homography matrix between two images needs to be calculated. A first embodiment of the present invention provides a method for calculating a homography matrix between cameras. As shown in FIG. 2, the method includes:

201: Determine a spatial relationship parameter between two scenes. The spatial relationship parameter may be represented by a function. It is assumed that one scene is $P_1$ and the other scene is $P_2$, and then the spatial relationship parameter may be represented by $P_2 = f(P_1)$.

202: Obtain a spatial relationship parameter between two cameras that photograph the two scenes respectively, and internal parameters of the two cameras. The spatial relationship parameter may also referred to as an external parameter and is used to represent a spatial position relationship between cameras; and the internal parameters are formed by geometrical and optical features of the cameras themselves, such as an amplification factor of coordinates of a main point. Concepts of the internal parameter and the external parameter are introduced in detail in the following:

An internal parameter of a camera is represented by a matrix K, which is specifically as follows:

$$K = \begin{bmatrix} k_u & s & p_u \\ 0 & k_v & p_v \\ 0 & 0 & 1 \end{bmatrix},$$

where $k_u$ is an amplification factor in a unit of pixel in a u direction (transverse) of an image, $k_v$ is an amplification factor in a unit of pixel in a v direction (longitudinal) of the image, and $k_u$ and $k_v$ are closely associated with a focal distance of the camera; s is a distortion factor that corresponds to distortion of a coordinate axis of the camera; and $p_u$ and $p_v$ are coordinates of a main point in a unit of pixel.

In the case where a sensitive array of the camera includes a square pixel, that is, $k_u = k_v$, if $s = 0$, $k_u$ and $k_v$ are a focal distance of the camera in a unit of pixel. If the sensitive array includes a non-square pixel, for example, a CCD (charge coupled) camera, $k_u$ is a ratio of a focal distance f to the size of a pixel in the u direction, and $k_v$ is a ratio of the focal distance f to the size of a pixel in the v direction.

The external parameter includes a rotation matrix and a translation vector. A rotation matrix R is 3 x 3 stage rotation vector of a camera coordinate system relative to a world coordinate system, where the rotation matrix R is three-axial, and a translation vector t is a 1 x 3 stage translation vector of the camera coordinate system relative to the world coordinate system.

In this embodiment of the present invention, it is assumed that K, K' are internal parameter matrixes of a left camera and a right camera respectively, [I 0],[R t] are external parameters (which may together represent a spatial relationship between cameras) of the left camera and the right camera respectively, and [R t] are a rotation matrix and a translation vector of the right camera relative to the left camera.

203: Perform an operation on the spatial relationship parameter between the two scenes, the spatial relationship parameter between the cameras, and the internal parameters of the cameras to obtain a homography matrix between photographed images. Calculation of a homography matrix of images that correspond to the two scenes is derived as follows:

It is assumed that coordinates of $P_1$ and $P_2$ are $p_1$ and $p_2$ in their respective corresponding images, and meanwhile, it is assumed that homography matrix transformations between images photographed by two cameras are both H, and therefore:

$$\begin{cases} s_1 p_1 = K_1 [I \quad 0] P_1 \\ s_2 p_2 = K_2 [R \quad t] P_2 \end{cases},$$

where $s_1$ and $s_2$ indicate scale factors.

In addition, $p_2 = H p_1$

$$\Rightarrow s_2 p_2 = K_2 [R \quad t] f(P_1) = K_2 [R \quad t] f(K_1^{-1} s_1 p_1)$$

$$\Rightarrow s_2 H p_1 = K_2 [R \quad t] f(P_1) = K_2 [R \quad t] f(K_1^{-1} s_1 p_1),$$

if a function f is linear, then:

$$\Rightarrow s_2 H p_1 = K_2 [R \quad t] f(P_1) = K_2 [R \quad t] a K_1^{-1} s_1 p_1,$$

where a is a constant,

$$\Rightarrow s_2 H p_1 = a s_1 K_2 [R \quad \Rightarrow s_2 H p_1 = a s_1 K_2 [R \quad t] K_1^{-1} p_1,$$

and then $H \cong K_2 [R \quad t] K_1^{-1}$ .

The foregoing derivation process is merely based on the case where the function f is linear. When the function f changes, a formula for calculating H can still be derived, and the calculation formula includes a spatial relationship parameter between two scenes, a spatial relationship parameter between cameras, and internal parameters of the cameras. Therefore, a homography matrix between photographed images can be obtained by performing an operation on the spatial relationship parameter between the two scenes, the spatial relationship parameter between the cameras, and the internal parameters of the cameras.

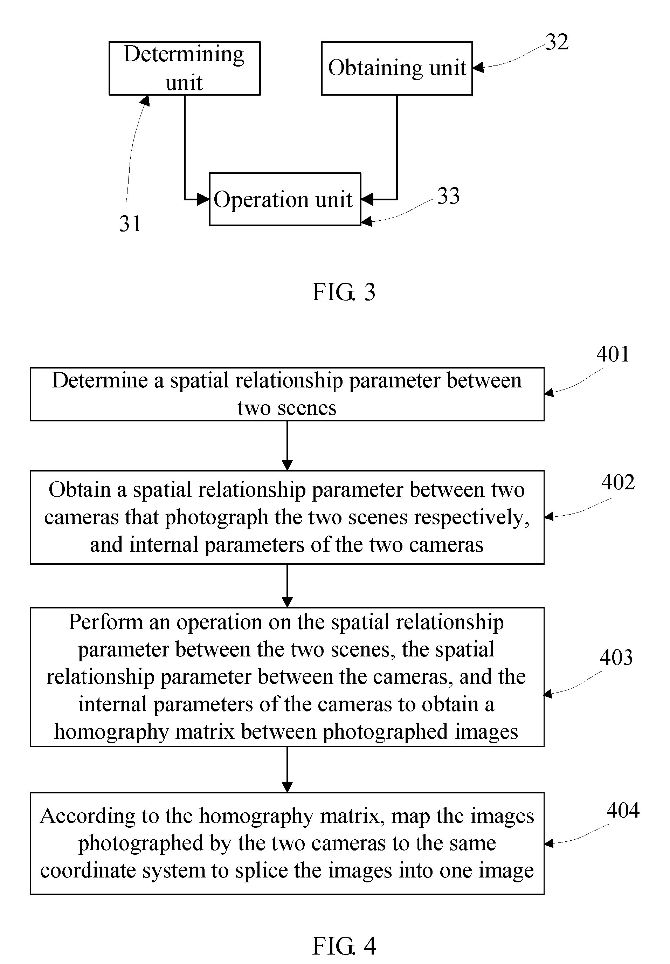

An embodiment of the present invention further provides an apparatus for calculating a homography matrix between cameras. As shown in FIG. 3, the apparatus includes: a determining unit 31, an obtaining unit 32, and an operation unit 33.

The determining unit 31 is configured to determine a spatial relationship parameter between two scenes, where the spatial relationship parameter may be represented by a function, and for details, reference is made to the description of FIG. 2. The obtaining unit 32 is configured to obtain a spatial relationship parameter between two cameras that photograph the two scenes respectively, and internal parameters of the two cameras, where the spatial relationship parameter is also referred to as an external parameter and is used to represent a spatial position relationship between cameras, and the internal parameters are formed by geometrical and optical features of the cameras themselves. The operation unit 33 is configured to perform an operation on the spatial relationship parameter between the two scenes, the spatial relationship parameter between the cameras, and the internal parameters of the cameras to obtain a homography matrix between photographed images.

An embodiment of the present invention further provides an image splicing method. As shown in FIG. 4, processes 401, 402, and 403 in this method are the same as processes 201, 202, and 203 in FIG. 2. After the foregoing processes are performed, a homography matrix between two photographed images may be obtained.

The image splicing method according to this embodiment of the present invention further includes the following process:

404: According to the homography matrix, map the images photographed by the two cameras to the same coordinate system to splice the images into one image, where the same coordinate system here may be a world coordinate system, or a coordinate system that corresponds to one of the images, or any other coordinate system. After all pixels on the images are mapped to the same coordinate system, all pixels on the two images are present in this coordinate system. In this way, initial image splicing is accomplished.

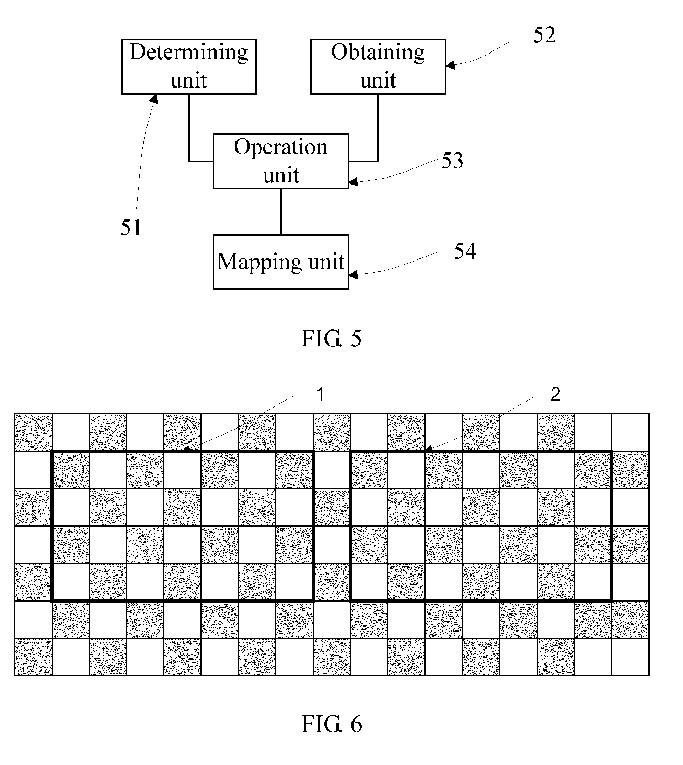

An embodiment of the present invention further provides an image splicing apparatus. As shown in FIG. 5, the apparatus includes: a determining unit 51, an obtaining unit 52, an operation unit 53, and a mapping unit 54. Functions of the determining unit 51, the obtaining unit 52, and the operation unit 53 are exactly the same as those of the determining unit 31, the obtaining unit 32, and the operation unit 33 in FIG. 3. And only a mapping unit is added. Specific functions are as follows:

The determining unit 51 is configured to determine a spatial relationship parameter between two scenes, where the spatial relationship parameter may be represented by a function, and for details, reference is made to the description of FIG. 2. The obtaining unit 52 is configured to obtain a spatial relationship parameter between two cameras that photograph the two scenes respectively, and internal parameters of the two cameras, where the spatial relationship parameter is also referred to as an external parameter and is used to represent a spatial position relationship between cameras, and the internal parameters are formed by geometrical and optical features of the cameras themselves. The operation unit 53 is configured to perform an operation on the spatial relationship parameter between the two scenes, the spatial relationship parameter between the cameras, and the internal parameters of the cameras to obtain a homography matrix between photographed images. The mapping unit 54 is configured to map, according to the homography matrix, the images photographed by the two cameras to the same coordinate system to splice the images into one image.

It can be known from the description of the foregoing embodiment that, the homography matrix may be directly calculated through the spatial relationship parameter between the two scenes, the spatial relationship parameter between the cameras, and the internal parameters of the cameras. In this way, when the homography matrix is calculated, neither an overlapped area between images nor a video sequence is required. That is to say, in this embodiment of the present invention, the homography matrix is calculated in the case where no video sequence is required and no overlapped area or only one column of overlapped pixels exist between two images, and the image splicing is accomplished by using the homography matrix.

**Embodiment 2**

Application of this embodiment of the present invention is described in the following by taking a photographed image of a large checkerboard as an example. First, a large checkerboard as shown in FIG. 6 is made. There are two areas that are to be photographed and are enclosed by a line 1 and a line 2 in the large checkerboard. Sizes of these two areas to be photographed may be adjusted according to an actual requirement. A black check or a white check in the foregoing checkerboard is generally a square or a rectangle with a known size. Sizes of checks in the checkerboard are known, and therefore, a position relationship (that is, a spatial relationship parameter between two scenes) of a three-dimensional space of the two areas to be photographed may be known or calculated out. That is to say, choosing any pair of checks in an area to be photographed, a relative position relationship between them is known or may be calculated out.

In addition, a left camera and a right camera are used to synchronously photograph checkerboards within their corresponding areas to be photographed. The two cameras are placed at different angles and positions to photograph a checkerboard that respectively corresponds to each of them.

Then, internal parameters and external parameters of the two cameras are calibrated. Generally, a Tsai two-step method, and a Zhang Zhengyou's checkerboard method may be adopted to calibrate internal and external parameters. When calibration is performed, a corresponding relationship between corner point positions in a template and corner point positions in a 3D space may be established. For establishment, reference may be made to the following:

The left camera photographs a left area to be photographed and the right camera photographs a right area to be photographed. A 3D spatial coordinate position of each corner point in a template of a red frame on the left may be set according to the Tsai method or the Zhang Zhengyou's checkerboard calibration method. After the setting is finished, a 3D spatial coordinate position of each corner point in a red frame on the right is set by referring to spacing in the checkerboard. If 3D spatial coordinates of a point (3, 3) are set to (20 mm, 20 mm, 10 mm), 3D spatial coordinates of a point (3, 14) may be set to (130 mm, 20 mm, 10 mm). Because the two points are coplanar, they have a definite measurement relationship between two-dimensional coordinates.

It is assumed that $K, K'$ are internal parameter matrixes of the left camera and the right camera respectively, $[I\ 0]$, $[R\ t]$ are external parameters (which may together represent a spatial relationship between cameras) of the left camera and the right camera respectively, and $[R\ t]$ are a rotation matrix and a translation vector of the right camera relative to the left camera.

It is assumed that coordinates of $P_1$ and $P_2$ are $p_1$ and $p_2$ in their respective corresponding images, and meanwhile, it is assumed that homography matrix transformations between images photographed by two cameras are both H, and therefore:

$$\begin{cases} s_1 p_1 = K_1 [I \quad 0] P_1 \\ s_2 p_2 = K_2 [R \quad t] P_2 \end{cases},$$

where $s_1$ and $s_2$ indicate scale factors.

In addition, $p_2 = Hp_1$

$$\Rightarrow s_2 p_2 = K_2 [R \quad t] f(P_1) = K_2 [R \quad t] f(K_1^{-1} s_1 p_1)$$

$$\Rightarrow s_2 Hp_1 = K_2 [R \quad t] f(P_1) = K_2 [R \quad t] f(K_1^{-1} s_1 p_1),$$

if a function f is linear, then:

$$\Rightarrow s_2 Hp_1 = K_2 [R \quad t] f(P_1) = K_2 [R \quad t] a K_1^{-1} s_1 p_1,$$

where a is a constant,

$$\Rightarrow s_2 H p_1 = a s_1 K_2 [R \quad t] K_1^{-1} p_1 ,$$

and then: $K_1^{-1}$ , where $\cong$ indicates that a difference between two sides of the equation is one scale factor.

H may be standardized. As required, det(H) =1 , it is easy to know that $a = \sqrt[3]{1/\det(H)}$ , so that $H$ is transformed into a unit determinant value, and is changed to HH, and then:

$$HH = \sqrt[3]{1/\det(H)} \cdot H$$

So far, a homography matrix between images photographed by two cameras is calculated by using a large checkerboard. Further, image splicing, especially image splicing in the case of no overlapped area between images or few overlapped areas between images, may be performed by using a transformation relationship between the images, for example, the case of two images with only one column of overlapped pixels is the case of few overlapped areas. Actually, the homography matrix calculated through this embodiment of the present invention may also be applied to other image processing processes, and is not limited to the image splicing application provided in this embodiment of the present invention.

In the foregoing derivation process, R and t are a rotation matrix and a translation vector respectively between a three-dimensional space world coordinate system and a camera coordinate system. If the camera coordinate system, along directions under the world coordinate system, rotates around an X axis by an angle (α) in a counter-clockwise direction, rotates around a Y axis by an angle (β) in a counter-clockwise direction, and rotates around a Z axis by an angle (y) in a counter-clockwise direction, the rotation matrix is:

$$R = R_\alpha R_\beta R_\gamma = \begin{bmatrix} r_{11} & r_{12} & r_{13} \\ r_{21} & r_{22} & r_{23} \\ r_{31} & r_{32} & r_{33} \end{bmatrix} ,$$

where:

$$R_\alpha = \begin{bmatrix} 1 & 0 & 0 \\ 0 & \cos\alpha & \sin\alpha \\ 0 & -\sin\alpha & \cos\alpha \end{bmatrix} ,$$

$$R_\beta = \begin{bmatrix} \cos\beta & 0 & -\sin\beta \\ 0 & 1 & 0 \\ \sin\beta & 0 & \cos\beta \end{bmatrix} ,$$

and

$$R_\gamma = \begin{bmatrix} \cos\gamma & \sin\gamma & 0 \\ -\sin\gamma & \cos\gamma & 0 \\ 0 & 0 & 1 \end{bmatrix},$$

and $\begin{pmatrix} T_x \\ T_y \\ T_z \end{pmatrix}$, where $T_x$, $T_y$, and $T_z$ are translation variants (after rotation) of transformation from the world coordinate system to the camera coordinate system along three coordinate axes.

In this embodiment, if a transformation relationship between images is found, the images may be registered and aligned, and two images are mapped to the same coordinate system (for example, a plane coordinate system, a cylinder coordinate system, or a spherical coordinate system). In the present invention, a cylinder coordinate system is used, and this coordinate system may also be a coordinate system of one of the images.

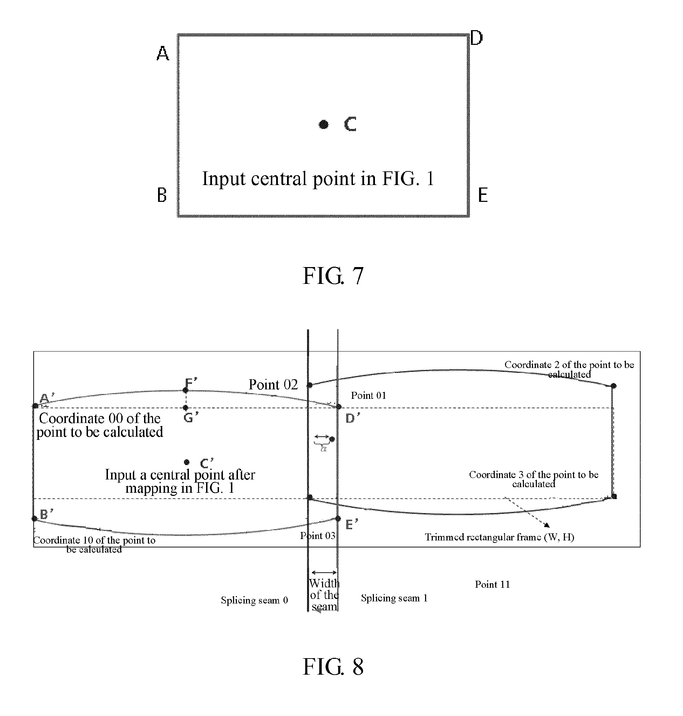

As shown in FIG. 7 and FIG. 8, each pixel point in ABED in FIG. 7 is transformed to A'B'E'D' as shown in FIG. 8 through cylinder coordinate transformation, and then by using a calculated homography matrix transformation relationship, each pixel point in a second image is mapped one by one to a cylinder through cylinder coordinate transformation. The registration and alignment of the images are accomplished in this step.

Two images are spliced together after the images are registered and aligned. If the images have a quite small color difference after registration and alignment are accomplished, color fusion may not be performed, and a panoramic image or a wide-scene image is generated through directly splicing and alignment. However, image sampling and light intensity at different moments are different, and therefore, there is an obvious seam at a margin of a spliced image. In this embodiment of the present invention, to create a better effect for the spliced image, color fusion may also be performed for the spliced image. Color fusion for images aims to eliminate incontinuity of the light intensity or the color of the image. Its main idea is that the light intensity is smoothly transited at a splicing position of the images, so as to eliminate a sudden change of the light intensity. Color fusion may be implemented by adopting a common technology such as a median filter, a weighted average method, a multiple-resolution spline method, or a Possion equation.

During specific implementation, color fusion may be implemented by adopting, but not limited to, the following methods:

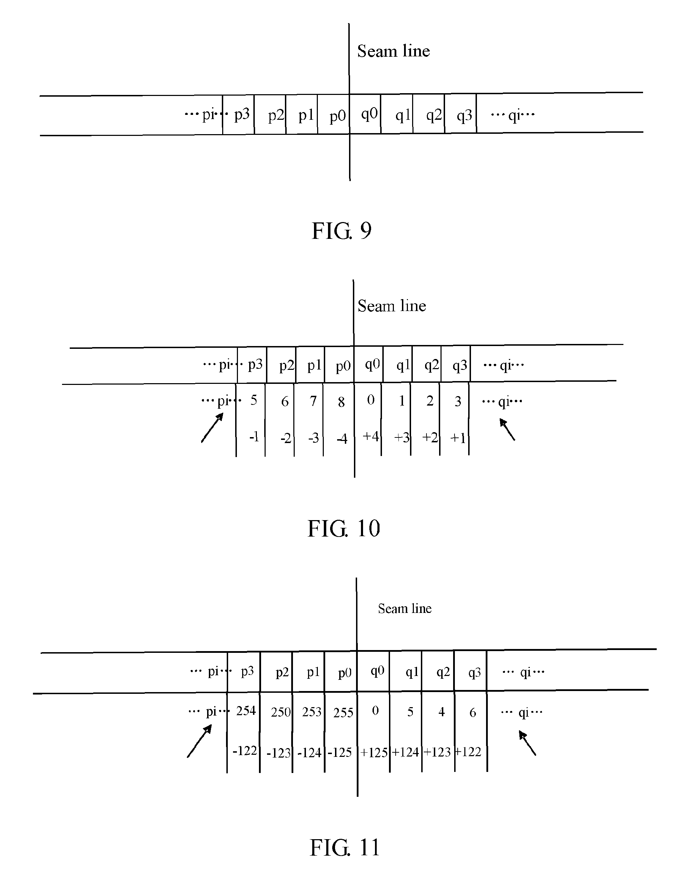

First, a seam line after splicing needs to be found. It is assumed that a seam line generated after splicing is shown in FIG. 9, pi represents a certain color value of a first image that is spliced, and qi represents a color value that corresponds to a certain pixel point on a second image that is spliced. It is assumed that in FIG. 9, p0 = 8, p1 = 7, p2 = 6, p3 = 5; q0 = 0, q1 = 1, q2=2,q3=3.

Pixel points on two sides of the seam line are p0 and q0. A color difference iDelta = abs(p0 - q0) = 8. An average color difference iDeltaAver = abs((p0 - q0)/2) = 4. Then the number of pixel points that need to be updated on the two sides of the seam line is iDeltaAver, that is, the pixel points that need to be updated on the left side and the right side of the seam line are p0, p1, p2, p3; q0, q1, q2, q3 respectively.

As shown in FIG. 10, a manner for updating color values of the pixel points on the two sides of the seam line in FIG. 9 is: Color values on the left side of the seam line are greater than those on the right side, and therefore, color values of pixel points on the left side of the seam line increase gradually, that is, a color value of p0 is updated to an original value of p0 plus negative iDeltaAver, a color value of p1 is updated to an original value of p1 plus negative (iDeltaAver - 1), a color value of p2 is updated to an original value of p2 plus negative (iDeltaAver - 2), and a color value of p3 is updated to an original value of p3 plus negative (iDeltaAver - 3); and color values of pixel points on the right side of the seam line decrease gradually, that is, a color value of q0 is updated to an original value of q0 plus positive iDeltaAver, a color value of q1 is updated to an original value of q1 plus positive (iDeltaAver - 1), a color value of q2 is updated to an original value of q2 plus positive (iDeltaAver - 2), and a color value of q3 is updated to an original value of q3 plus positive (iDeltaAver - 3).

Definitely, if the average color difference between the two sides of the seam line is larger, it is indicated that colors of more pixel points need to be updated. Specifically, as shown in FIG. 11, it is assumed that a seam line generated after splicing is shown in FIG. 11, a point pi represents a certain color value of a first image that is spliced, and a point qi represents a color value that corresponds to a certain pixel point on a second image that is spliced, p0 = 255, p1 = 253, p2 = 250, p3 = 254; q0 = 0, q1 = 5, q2 = 4, q3 = 6.

Pixel points on two sides of the seam line are p0 and q0. A color difference iDelta = abs(p0 - q0) = 255. An average color difference iDeltaAver = abs((p0 - q0)/2) = 127. Then the number of pixel points that need to be updated on the two sides of the seam line is iDeltaAver + 1 on the left side and is iDeltaAver on the right side, that is, the pixel points that need to be updated on the two sides of the seam line are p0, p1, p2, p3,..., p128; q0, q1, q2, q3,..., q127 respectively.

A manner for updating color values of the pixel points on the two sides of the seam line in FIG. 11 is: Color values on the left side of the seam line are greater than those on the right side, and therefore, color values of pixel points on the left side of the seam line increase gradually, that is, a color value of p0 is updated to an original value of p0 plus negative iDeltaAver, a color value of p1 is updated to an original value of p1 plus negative (iDeltaAver -1), a color value of p2 is updated to an original value of p2 plus negative (iDeltaAver - 2), and a color value of p3 is updated to an original value of p3 plus negative (iDeltaAver - 3), and so on; and color values of pixel points on the right side of the seam line decrease gradually, that is, a color value of q0 is updated to an original value of q0 plus positive iDeltaAver, a color value of q1 is updated to an original value of q1 plus positive (iDeltaAver - 1), a color value of q2 is updated to an original value of q2 plus positive (iDeltaAver - 2), and a color value of q3 is updated to an original value of q3 plus positive (iDeltaAver - 3), and so on.

To make color fusion more reasonable, for a method for calculating a color difference between two sides of a seam line, an average of color differences of multiple pixel points on the two sides of the seam line may also be used as a color difference between the two sides of the seam line. Further, a half of the average of the color differences is used as the number of pixel points that need to be updated on the two sides of the seam line. For example, after a seam line is determined, for a p point on the left side, i pixel points: p0, p1,..., pi - 1, may be selected in total, an average and a sum of which are calculated; and in the same way, for a q point, an average and a sum are also calculated A subtraction operation is performed on these two averages to obtain a difference which is the color difference between the two sides of the seam line. A subsequent processing manner is the same as that in the first and second embodiments.

It can be known from the description of the foregoing embodiment that, the homography matrix may be directly calculated through the spatial relationship parameter between the two scenes, the spatial relationship parameter between the cameras, and the internal parameters of the cameras. In this way, neither an overlapped area between images nor a video sequence is required when the homography matrix is calculated. That is to say, in this embodiment of the present invention, the homography matrix is calculated in the case where no video sequence is required and no overlapped area or only one column of overlapped pixels exist between two images, and the image splicing is accomplished by using the homography matrix.

**Embodiment 3**

In this embodiment, it is assumed that $P_1$ and $P_2$ are two points in two scenes, and a spatial position relationship between the two scenes is $P_2 = P_1 + b$. And it is assumed that K, K' are internal parameter matrixes of a left camera and a right camera respectively, $[R_1\ t_1], [R_2\ t_2]$ are external parameters (which may together represent a spatial relationship between cameras) of the left camera and the right camera respectively, and $[R\ t]$ are a rotation matrix and a translation vector of the right camera relative to the left camera.

It is assumed that coordinates of $P_1$ and $P_2$ are $p_1$ and $p_2$ in their respective corresponding images, and $P_1$ and $P_2$ correspond to points $P_{c1}$ and $P_{c2}$ in a camera coordinate system, then:

$$\begin{cases} P_1 = R_1 P_{c1} + t_1 \\ P_2 = R_2 P_{c2} + t_2 \end{cases}$$

A relative position relationship between cameras does not change, and therefore, H does not change either,

then: $P_2 = R_2 P_{c2} + t_2 = R_1 P_{c1} + t_1 + b$, accordingly, $\Rightarrow R_2 s_2 P_{c2} + t_2 = R_1 s_1 P_{c1} + t_1 + b$, where and $s_2$ represent depths of $P_{c1}$ and $P_{c2}$.

Make $l_1 = R_1 \overset{\square}{P}_{c1}, l_2 = R_2 \overset{\square}{P}_{c2}, t = t_2 - t_1 - b$, then, $\Rightarrow s_1 l_1 + s_2 l_2 = t$;

when position depths $s_1$ and $s_2$ are removed,

$$l_1^T (t \times l_2) = 0,$$

and therefore:

$$P_{c1}R_1^T[t_2 - t_1 - b]_X R_1 P_{c2} = 0 ;$$

in addition, because: $p = K\overline{P}_{ci}$ , or $p_1^T F p_2 = 0$ , where F is a fundamental matrix,,

then:

$$p_1^T K_1^{-1} R_1^T [t_2 - t_1 - b]_x R_1 K_2^{-1} p_2 = 0 ;$$

and therefore: $F = K_1^{-1} R_1^T [t_2 - t_1 - b]_x R_1 K_2^{-1}$ , where $\square^x$ represents a cross-product matrix.

A concept of the cross-product matrix is specifically as follows. It is assumed that a vector $a = (a_1\ a_2\ a_3)$ , then

its corresponding cross-product matrix is $[a]_x = \begin{pmatrix} 0 & -a_3 & a_2 \\ a_3 & 0 & -a_1 \\ -a_2 & a_1 & 0 \end{pmatrix}$ and for a random vector $b$, $a \times b = [a]_x b$.

Based on the foregoing fundamental matrix F, polar points e and e' of a photographed image sequence may be calculated out according to the following formula: $\begin{cases} \mathbf{Fe = 0} \\ \mathbf{F^T e' = 0} \end{cases}$ . It is assumed that homography matrix transformations between images photographed by two cameras are both H, then $e_i' \cong He_i$ , and an element in H is represented by $h_i$, where $h_i$ (i = 1...9, integers) is an element at each position of a 3 x 3 matrix H. Being counted from left to right and from top to bottom, correspondingly, the formula $e_i' \cong He_i$ is specifically represented as:

$$(e_i')_x = \frac{[h_1\ \ h_2\ \ h_3]e_i}{[h_7\ \ h_8\ \ h_9]e_i}, (e_i')_y = \frac{[h_4\ \ h_5\ \ h_6]e_i}{[h_7\ \ h_8\ \ h_9]e_i} \quad (1)$$

And then a formula (1) is substituted into $e_i' \cong He_i$ to obtain the following formula:

$$\begin{bmatrix} e_i^T & \vec{0}^T & (e_i')_x e_i^T \\ \vec{0}^T & e_i^T & (e_i')_y e_i^T \end{bmatrix}_{2\times9} \vec{h} = 0$$ where $\overline{h}$ is a column vector of H. Iterative optimization and calculation are performed to solve an equation group according to $\begin{bmatrix} e_i^T & \vec{0}^T & (e_i')_x e_i^T \\ \vec{0}^T & e_i^T & (e_i')_y e_i^T \end{bmatrix}_{2\times9} \vec{h} = 0$ e is known data, and therefore, each

column vector $\overline{h}$ of H may be calculated out, so as to obtain a homography matrix H.

The foregoing derivation process of a relationship between the polar points and the fundamental matrix is as follows:

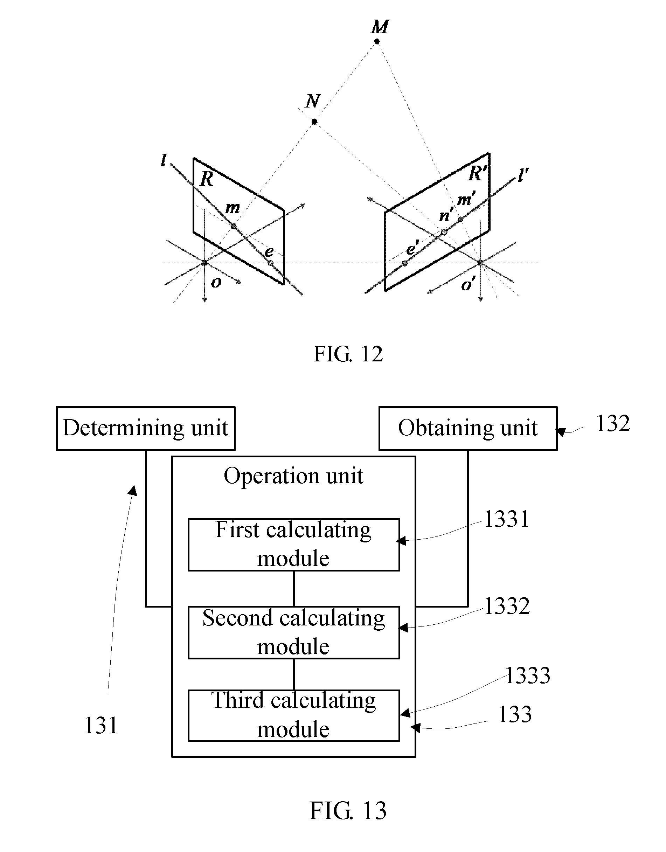

Two cameras are generally needed in a binocular vision system. FIG. 12 shows a stereoscopic vision system model that is formed by two cameras, where (*o,o'*) is an optical center of the cameras, a point M is a certain point in the space, and m and m' are images of the spatial point M respectively, where the images of the spatial point M are photographed by a left camera and a right camera. A straight line *oo'* crosses an image plane *R,R'* at two points *e,e'* which are called polar points. A line passing through the polar points in the two images is called a polar line.

In a camera coordinate system, the following polar line constraint exists: For any point in a first image plane, its corresponding point in the other image plane definitely falls on a polar line of the other image plane. For a point m, a dual mapping relationship exists between the point m and a polar line $l'$. According to projection equations and polar line principles of the left camera and the right camera, the following may be obtained:

$$\begin{cases} \mathbf{m} \approx \mathbf{P}_l^E \begin{bmatrix} \mathbf{X} \\ 1 \end{bmatrix} \\ \mathbf{m}' \approx \mathbf{P}_r^E \begin{bmatrix} \mathbf{X} \\ 1 \end{bmatrix} \end{cases} \Rightarrow \begin{cases} \mathbf{m} \approx \mathbf{KX} \\ \mathbf{m}' \approx \mathbf{K}'(\mathbf{RX} + \mathbf{T}) \end{cases} \Rightarrow \begin{cases} (\mathbf{m}')^T \mathbf{Fm} = \mathbf{0} \\ \mathbf{F} = \mathbf{K}'^{-T} [\mathbf{T}]_\times \mathbf{RK}^{-1} \end{cases}$$

F is a fundamental matrix, and its rank is 2, and F is uniquely determined in the case of a difference of one constant factor. F may be linearly determined through eight pairs of corresponding points in the images. $[T]_\times$ is an anti-symmetric matrix of T.

Accordingly, a relationship between an epipolar line and a fundamental matrix may be derived as:

$$\begin{cases} \mathbf{l}' = \mathbf{Fm} \\ \mathbf{l} = \mathbf{F}^T \mathbf{m}' \end{cases}.$$

A relationship between an epipolar point and the fundamental matrix is: $\begin{cases} \mathbf{Fe} = \mathbf{0} \\ \mathbf{F}^T \mathbf{e}' = \mathbf{0} \end{cases}.$

So far, a homography matrix between images photographed by two cameras is calculated. Further, image splicing, especially image splicing in the case of no overlapped area between images or few overlapped areas between images, may be performed by using a transformation relationship between the images, for example, the case of two images with only one column of overlapped pixels is the case of few overlapped areas. A specific image splicing process may adopt, but not limited to, the method described in the first embodiment. Actually, the homography matrix calculated through this embodiment of the present invention may also be applied to other image processing processes, and is not limited to the image splicing application provided in this embodiment of the present invention.

It can be known from the foregoing embodiment that, the homography matrix may be directly calculated through the spatial relationship parameter between the two scenes, the spatial relationship parameter between the cameras, and the internal parameters of the cameras. In this way, neither an overlapped area between images nor a video sequence is required when the homography matrix is calculated. That is to say, in this embodiment of the present invention, the homography matrix is calculated in the case where no video sequence is required and no overlapped area or only one column of overlapped pixels exist between two images, and the image splicing is accomplished by using the homography matrix.

**Embodiment 4**

In the second embodiment, a spatial position relationship between two scenes is defined as linearity, whereas in the third embodiment, the relationship is defined as linearity plus an offset. Actually, a function relationship in $P_2 = f(P_1)$ may be set as a more complex relationship. Regardless of its function relationship, a method for solving H may be derived through a method in the second embodiment or the third embodiment. In addition, H is related to the function relationship in $_P2 = f(P_1)$ and internal and external parameters of cameras, where a principle is the same as that in the second and third embodiments. A key point is to use a known or solvable position relationship of three-dimensional spatial points to derive a dual mapping relationship (which is represented by using a homography matrix H) between images or between a left camera and a right camera. Further, a calculated H may be used to perform an operation such as image splicing.

In the second embodiment and the third embodiment, a spatial relationship parameter between two scenes is preset. But actually, for a more complex scene, a spatial relationship parameter between two scenes and internal and external parameters of cameras may be determined through, but are not limited to, the following manners:

First, a spatial relationship parameter between the two scenes is obtained through a depth camera; and meanwhile, a one-to-one corresponding relationship between a 3D spatial point and an image point is respectively established through images photographed by each camera, and then various existing calibration methods may be used to calibrate internal and external parameters of each camera. Further, a homography matrix may be calculated by using the methods described in the second and third embodiments, and image calibration and alignment are performed by using the homography matrix. Then, two images are spliced into a wide-scene image.

Second, a spatial relationship parameter between the two scenes is determined through an object that has obvious and continuous feature information and is across the two scenes. For splicing between images without an overlapped area or with a small overlapped area, other objects with obvious and continuous feature information such as a long batten across areas of images may be used as reference. Further, a position transformation relationship between images is obtained by detecting and matching the feature information, and then image splicing is performed.

For example, the same object with a known structure is bound at each of two ends of a thin steel bar with a known size. In this way, a corresponding relationship between their own feature points of these two objects may be established and a 3D geometrical spatial position relationship of these two objects is also known. Meanwhile, a one-to-one corresponding relationship between a 3D spatial point and an image point of each image is established through an image photographed by each camera. Further, a homography matrix is calculated by using the methods described in the second and third embodiments, and image calibration and alignment are performed by using the homography matrix. Then, two images are spliced into a wide-scene image.

Third, a spatial relationship parameter between the two scenes is determined through a self-calibration method, and internal and external parameters of cameras are obtained. A specific implementation process is as follows:

1. A common optical center of two cameras is fixed at the same position in a 3D space, and the cameras are rotated to different directions to photograph the same scene to obtain different images. In a process of photographing image sequences, an internal parameter K of the cameras remains unchanged, that is, an internal parameter, such as a focal distance, of the cameras remains unchanged. It is assumed that photographed image sequences include an image 0, an image 1..., and an image N-1, and totally N images ($N \geq 3$) are included. The following self-calibration steps are used to calculate an internal parameter matrix K of the cameras and 3D spatial coordinates of a feature point.

2. Feature points of each image are extracted by using a SIFT feature point extraction method and a corresponding relationship between feature points of each image is established by using a related matching method.

3. For any other image except the image 0, a 2D projection transformation $P_j$ for transforming the image 0 to an image J is calculated.

4. N-1 $P_j$ s obtained in step 2 are respectively transformed to unit determinant values.

5. An upper triangular matrix K is found to make that $K^{-1}P_jK = R_j$ is a rotation matrix (j = 1,2...N-1). The matrix K is a calibration matrix of an internal parameter of a camera, $R_j$ represents a rotation matrix of the image J relative to the image 0, and K and $R_j$ may be calculated out by using N-1 equations. That is to say, the internal parameter and the rotation matrix of the camera are determined through this method. The common optical center of the two cameras is fixed at the same position in a 3D world space, and therefore, it can be known that a translation vector is 0.

6. The internal parameter and external parameter of the camera are determined. Therefore, world coordinates of two scenes may be calculated by using the following formulas:

$$\begin{cases} s_1 p_1 = K_1 [I \quad 0] P_1 \\ s_2 p_2 = K_2 [R \quad t] P_2 \end{cases}$$

A three-dimensional position relationship of these two scenes may be obtained through the world coordinates of the two scenes.

In this embodiment of the present invention, a manner in a first embodiment may be adopted for image splicing. In addition, color fusion during image splicing may be performed by adopting, but is not limited to, the following methods:

First, when the foregoing second method is adopted to obtain a spatial relationship parameter between two scenes, if an object with obvious and continuous feature information is a gray grid image test board, specifically, the gray scale grid image test board is fixed at a certain fixed position in front of two cameras, so that the two cameras can both photograph a part of the test board and the two cameras are in the same test environment. The left camera photographs the left half part of the test board and the right camera photographs the right half part of the test board to obtain two original images. The two cameras have some objective differences, which results in an obvious seam in the middle after the two original images are spliced together. In this embodiment, to soften this seam, three-channel color values of 11 gray scale grids on the left and right side of the seam are read. An average color value of each gray scale grid may be used as a color value of the gray scale grid, or an average value after filter denoising is used as a color value of the gray scale grid. Then, each of three-channel color gray scale values of the 11 gray scale grids is weighted and averaged, and an average value of each gray scale grid is used as a standard color value of an image after gray scale grid correction on the left and the right. In addition, a color value of each channel of the left and right gray scale grid is matched to a corrected standard color value, and then an interpolated color of the color value after matching is used to enlarge gray levels to 255 gray levels, so as to generate a left and right image color lookup table. Finally, the foregoing algorithm is applied to the seam on the whole image that is spliced by the original images, so as to generate a corrected image eventually. To a great extent, adopting the color fusion can make the seam in the middle of the corrected image soften, even disappear.

Definitely, the foregoing adopted gray scale grid image test board may be changed to a colorful square image test board. And the same method in the foregoing may be adopted to perform color fusion. Finally, a better color fusion effect is achieved.

To use conveniently, a black-white checkerboard may be used to replace the gray scale grid image test board, or a colorful checkerboard may be used to replace the colorful square image test board.

Second, it is considered that using multiple gray scale grids is inconvenient. A feature point detecting and matching method may be used to generate multi-gray-level matching between two cameras, so as to obtain a left and right image color lookup table. Then, the algorithm is applied to the seam on the whole image that is spliced by the original images, so as to generate a corrected image eventually.

**Embodiment 5**

An embodiment of the present invention further provides an apparatus for calculating a homography matrix between cameras. As shown in FIG. 13, the apparatus includes: a determining unit 131, an obtaining unit 132, and an operation unit 133.

The determining unit 131 is configured to determine a spatial relationship parameter between two scenes, where the spatial relationship parameter may be represented by a function. The determining unit may be implemented by adopting the method illustrated in the fourth embodiment. For example, the determining unit 131 may preset a spatial relationship parameter between the two scenes, or obtain a spatial relationship parameter between the two scenes through a depth camera, or determine a spatial relationship parameter between the two scenes through an object that has obvious and continuous feature information and is across the two scenes, or determine a spatial relationship parameter between the two scenes through a self-calibration method. The obtaining unit 132 is configured to obtain a spatial relationship parameter between two cameras that photograph the two scenes respectively, and internal parameters of the two cameras. The obtaining unit 132 obtains the spatial relationship parameter between the two cameras, and the internal parameters of the two cameras through a self-calibration method. Generally speaking, the spatial relationship parameter between the two cameras includes: a rotation matrix and a translation vector of the two cameras relative to a world coordinate system, and is used to represent a spatial position relationship between cameras, and the internal parameters are formed by geometrical and optical features of the cameras. The operation unit 133 is configured to perform an operation on the spatial relationship parameter between the two scenes, the spatial relationship parameter between the cameras, and the internal parameters of the cameras to obtain a homography matrix between photographed images.

In the second embodiment, in the case where a spatial relationship parameter between two scenes is linearity and a coordinate system of one of the cameras is used as a world coordinate system, the operation unit 133 performs the operation according to the following manner: $H = a \bullet K_2 [R\ t] K_1^{-1}$, where H is the homography matrix, *a* is a scale factor, $K_1^{-1}$ is an inverse matrix of an internal parameter of one of the cameras, $K_2$ is an internal parameter of the other camera, R is a rotation matrix of the other camera relative to the world coordinate system, and t is a translation vector of the other camera relative to the world coordinate system.

In the third embodiment, in the case where a spatial relationship parameter between two scenes is linearity plus an offset, the operation unit 133 includes: a first calculating module 1331, a second calculating module 1332, and a third calculating module 1333. The first calculating module 1331 is configured to perform an operation on the spatial relationship parameter between the two scenes, the spatial relationship parameter between the cameras, and the internal parameters of the cameras to obtain a fundamental matrix F, where a calculation formula is

$$F = K_1^{-1} R_1^T \left[ t_2 - t_1 - b \right]_X R_1 K_2^{-1},$$

where F is a fundamental matrix, $K_2^{-1}$ is an inverse matrix of an internal parameter of one of the cameras, $t_2$ is a translation vector of the camera relative to the world coordinate system, and b is the offset; $K_1^{-1}$ I is an inverse matrix of an internal parameter of the other camera, $R_1$ is a rotation matrix of the other camera relative to the world coordinate system, $R_1^T$ is a transposition of $R_1$, $t_1$ is a translation vector of the other camera relative to the world coordinate system, and $[]_x$ represents a cross-product matrix. The second calculating module 1332 is configured to calculate an epipolar point by using a relationship between fundamental matrix calculation and the epipolar point, where the relationship between the fundamental matrix calculation and the epipolar point is $\begin{cases} Fe = 0 \\ F^T e' = 0 \end{cases}$, where e is an epipolar point of one of the images, and e' is an epipolar point of the other image. The third calculating module 1333 is configured to calculate a homography matrix H according to $e'_i = He_i$, where i represents a frame number of a synchronous frame.

In this embodiment, after a transformation relationship between images is found, the images may be registered and aligned, and the two images may be mapped to the same coordinate system (for example, a plane coordinate system, a cylinder coordinate system, or a spherical coordinate system). In the present invention, a cylinder coordinate system is used, and this coordinate system may also be a coordinate system of one of the images.

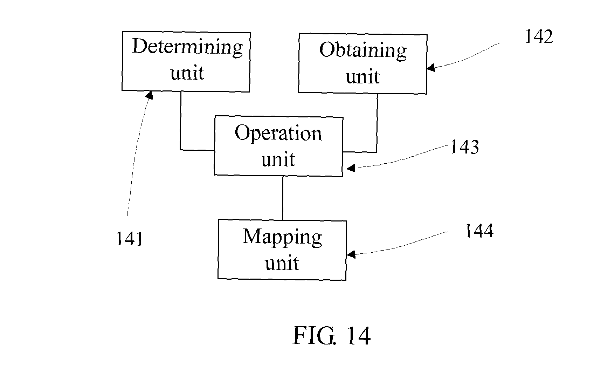

An embodiment of the present invention further provides an image splicing apparatus. As shown in FIG. 14, the image splicing apparatus includes: a determining unit 141, an obtaining unit 142, an operation unit 143, and a mapping unit 144.

Functions of the determining unit 141, the obtaining unit 142, and the operation unit 143 are exactly the same as those of the determining unit 131, the obtaining unit 132, and the operation unit 133 in FIG. 13. And only a mapping unit 144 is added. A specific function is as follows: The mapping unit 144 is configured to map, according to the homography matrix, the images photographed by the two cameras to the same coordinate system to splice the images into one image.

Two images are spliced together after the images are registered and aligned. If the images have a quite small color difference after registration and alignment are accomplished, color fusion may not be performed, and a panoramic image or a wide-scene image is generated through directly splicing and alignment. However, image sampling and light intensity at different moments are different, and therefore, there is an obvious seam at a margin of a spliced image. In this embodiment of the present invention, to create a better effect for the spliced image, the image splicing apparatus further includes a fusion unit 145, configured to perform color fusion on the spliced image. The specific fusion may be made reference to, but is not limited to, the implementation manner described in the second embodiment.

To achieve the fusion manner in the second embodiment, the fusion unit 145 in this embodiment of the present invention includes: a calculating module 1451 and an updating module 1452. The calculating module 1451 is configured to calculate an average color difference between pixel points on two sides of a splicing seam line on the spliced image. The updating module 1452 is configured to increase color values on one side of the seam line in a descending manner of the average color difference, where the color values on the one side of the seam line are smaller; and reduce color values on the other side of the seam line in an descending manner of the average color difference, where the color values on the other side of the seam line are larger. For a specific updating process, reference is made to the description in the second embodiment.

The embodiments of the present invention are mainly applied to calculation of a homography matrix between two images, especially to calculation of a homography matrix in an image splicing process.

Persons skilled in the art may understand that all or a part of steps in various methods in the foregoing embodiments may be accomplished by a program instructing relevant hardware. The program may be stored in a computer readable storage medium. The storage medium may include a read only memory (ROM, Read Only Memory), a random access memory (RAM, Random Access Memory), a magnetic disk, or a compact disk, and so on.

The foregoing descriptions are merely specific embodiments of the present invention, but are not intended to limit the protection scope of the present invention. Within the technical scope disclosed in the present invention, variations or replacements that may be easily thought of by persons skilled in the art should all fall within the protection scope of the present invention. Therefore, the protection scope of the present invention should be subject to the protection scope of the claims.

**Claims**

1. An image splicing method, comprising:

determining a spatial relationship parameter between two scenes;

obtaining a spatial relationship parameter between two cameras that photograph the two scenes respectively, and internal parameters of the two cameras;

performing an operation on the spatial relationship parameter between the two scenes, the spatial relationship parameter between the cameras, and the internal parameters of the cameras to obtain a homography matrix between photographed images; and

according to the homography matrix, mapping the images photographed by the two cameras to the same coordinate system to splice the images into one image.

2. The image splicing method according to claim 1, wherein the spatial relationship parameter between the two cameras comprises: a rotation matrix and a translation vector of the two cameras relative to a world coordinate system.

3. The image splicing method according to claim 2, wherein when the spatial relationship parameter between the two scenes is linearity, and a coordinate system of one of the cameras is used as the world coordinate system, the operation is performed according to the following manner to obtain a homography matrix:

$$\mathrm{H} = a \bullet \mathrm{K}_2 \begin{bmatrix} \mathrm{R} & \mathrm{t} \end{bmatrix} \mathrm{K}_1^{-1} ,$$

wherein H is the homography matrix, a is a scale factor, $\mathrm{K}_1^{-1}$ is an inverse matrix of an internal parameter of one of the cameras, $K_2$ is an internal parameter of the other camera, R is a rotation matrix of the other camera relative to the world coordinate system, and t is a translation vector of the other camera relative to the world coordinate system.

4. The image splicing method according to claim 2, wherein when the spatial relationship parameter between the two scenes is linearity plus an offset, a process of performing the operation to obtain the homography matrix comprises:

performing an operation on the spatial relationship parameter between the two scenes, the spatial relationship parameter between the cameras, and the internal parameters of the cameras to obtain a fundamental matrix F;

calculating an epipolar point by using a relationship between fundamental matrix calculation and the epipolar point, wherein the relationship between the fundamental matrix calculation and the epipolar point is $\begin{cases} \mathrm{Fe} = 0 \\ \mathrm{F}^\mathrm{T}\mathrm{e}' = 0 \end{cases}$,

wherein e is an epipolar point of one of the images, and e' is an epipolar point of the other image; and

calculating a homography matrix H according to $e'_i = He_i$, wherein i represents a frame number of a synchronous frame.

5. The image splicing method according to claim 4, wherein the fundamental matrix is obtained through calculation according to the following manner: $\mathrm{F} = \mathrm{K}_1^{-1}\mathrm{R}_1^\mathrm{T}\begin{bmatrix} \mathrm{t}_2 - \mathrm{t}_1 - \mathrm{b} \end{bmatrix}_X \mathrm{R}_1 \mathrm{K}_2^{-1}$,

wherein F is the fundamental matrix, $\mathrm{K}_2^{-1}$ is an inverse matrix of an internal parameter of one of the cameras, $t_2$ is a translation vector of the camera relative to the world coordinate system, and b is the offset; and $\mathrm{K}_1^{-1}$ is an inverse matrix of an internal parameter of the other camera, $R_1$ is a rotation matrix of the other camera relative to the world coordinate system, $\mathrm{R}_1^\mathrm{T}$ is a transposition of $R_1$, $t_1$ is a translation vector of the other camera relative to the world coordinate system, and $[]_X$ represents a cross-product matrix.

6. The image splicing method according to any one of claims 1 to 5, wherein the determining a spatial relationship parameter between two scenes is:

presetting a spatial relationship parameter between the two scenes; or
determining a spatial relationship parameter between the two scenes through a depth camera; or
determining a spatial relationship parameter between the two scenes through an object that has obvious and continuous feature information and is across the two scenes; or
determining a spatial relationship parameter between the two scenes through a self-calibration method.

7. The image splicing method according to any one of claims 1 to 5, wherein a spatial relationship parameter between the two cameras, and internal parameters of the two cameras are obtained through a self-calibration method.

8. The image splicing method according to any one of claims 1 to 5, wherein the method further comprises: performing color fusion on a spliced image.

9. An image splicing apparatus, comprising:

a determining unit, configured to determine a spatial relationship parameter between two scenes;
an obtaining unit, configured to obtain a spatial relationship parameter between two cameras that photograph the two scenes respectively, and internal parameters of the two cameras;
an operation unit, configured to perform an operation on the spatial relationship parameter between the two scenes, the spatial relationship parameter between the cameras, and the internal parameters of the cameras to obtain a homography matrix between photographed images; and
a mapping unit, configured to map, according to the homography matrix, the images photographed by the two cameras to the same coordinate system to splice the images into one image.

10. The image splicing apparatus according to claim 9, wherein the spatial relationship parameter between the two cameras, determined by the determining unit, specifically comprises: a rotation matrix and a translation vector of the two cameras relative to a world coordinate system.

11. The image splicing apparatus according to claim 10, wherein when the spatial relationship parameter between the two scenes is linearity and a coordinate system of one of the cameras is used as the world coordinate system, the operation unit performs the operation according to the following manner: $H = a \bullet K_2[R\ t]\,K_1^{-1}$, wherein H is the homography matrix, $a$ is a scale factor, $K_1^{-1}$ is an inverse matrix of an internal parameter of one of the cameras, $K_2$ is an internal parameter of the other camera, R is a rotation matrix of the other camera relative to the world coordinate system, and t is a translation vector of the other camera relative to the world coordinate system.

12. The image splicing apparatus according to claim 10, wherein when the spatial relationship parameter between the two scenes is linearity plus an offset, the operation unit comprises:

a first calculating module, configured to perform an operation on the spatial relationship parameter between the two scenes, the spatial relationship parameter between the cameras, and the internal parameters of the cameras to obtain a fundamental matrix F;
a second calculating module, configured to calculate an epipolar point by using a relationship between fundamental matrix calculation and the epipolar point, wherein the relationship between the fundamental matrix calculation and the epipolar point is $\begin{cases} Fe = 0 \\ F^T e' = 0 \end{cases}$, wherein e is an epipolar point of one of the images, and e' is an epipolar point of the other image; and

a third calculating module, configured to calculate a homography matrix H according to $e'_i = He_i$, wherein i represents a frame number of a synchronous frame.

13. The image splicing apparatus according to claim 12, wherein the first calculating module performs the operation according to the following manner: $F = K_1^{-1} R_1^T \left[ t_2 - t_1 - b \right]_X R_1 K_2^{-1}$ ,

wherein F is the fundamental matrix, $K_2^{-1}$ is an inverse matrix of an internal parameter of one of the cameras, $t_2$ is a translation vector of the camera relative that is to the world coordinate system, and b is the offset; and $K_1^{-1}$ is an inverse matrix of an internal parameter of the other camera, $R_1$ is a rotation matrix of the other camera relative to the world coordinate system, $R_1^T$ is a transposition of $R_1$, $t_1$ is a translation vector of the other camera relative to the world coordinate system, and $[]_X$ represents a cross-product matrix.

14. The image splicing apparatus according to any one of claims 9 to 13, wherein the determining unit presets a spatial relationship parameter between the two scenes; or
the determining unit obtains a spatial relationship parameter between the two scenes through a depth camera; or
the determining unit determines a spatial relationship parameter between the two scenes through an object that has obvious and continuous feature information and is across the two scenes; or
the determining unit determines a spatial relationship parameter between the two scenes through a self-calibration method.

15. The image splicing apparatus according to any one of claims 9 to 13, wherein the obtaining unit obtains a spatial relationship parameter between the two cameras, and internal parameters of the two cameras through a self-calibration method.

16. The image splicing apparatus according to any one of claims 9 to 13, wherein the apparatus further comprises: a fusion unit, configured to perform color fusion on a spliced image.

FIG. 1

Determine a spatial relationship parameter between two scenes

201

Obtain a spatial relationship parameter between two cameras that photograph the two scenes respectively, and internal parameters of the two cameras

202

Perform an operation on the spatial relationship parameter between the two scenes, the spatial relationship parameter between the cameras, and the internal parameters of the cameras to obtain a homography matrix between photographed images

203

FIG. 2

Determining unit

Obtaining unit ◄ ─ 32

31

Operation unit ◄ ─ 33

## FIG. 3

| | 401 |
| Determine a spatial relationship parameter between two scenes | |

| | 402 |
| Obtain a spatial relationship parameter between two cameras that photograph the two scenes respectively, and internal parameters of the two cameras | |

| | 403 |
| Perform an operation on the spatial relationship parameter between the two scenes, the spatial relationship parameter between the cameras, and the internal parameters of the cameras to obtain a homography matrix between photographed images | |

| | 404 |
| According to the homography matrix, map the images photographed by the two cameras to the same coordinate system to splice the images into one image | |

## FIG. 4

Determining unit  51

Obtaining unit  52

Operation unit  53

Mapping unit  54

FIG. 5

1   2

FIG. 6

FIG. 7

FIG. 8

Seam line

| ···pi··· | p3 | p2 | p1 | p0 | q0 | q1 | q2 | q3 | ···qi··· |
|---|---|---|---|---|---|---|---|---|---|

FIG. 9

Seam line

| ···pi··· | p3 | p2 | p1 | p0 | q0 | q1 | q2 | q3 | ···qi··· |
|---|---|---|---|---|---|---|---|---|---|
| ···pi··· | 5 | 6 | 7 | 8 | 0 | 1 | 2 | 3 | ···qi··· |
|  | -1 | -2 | -3 | -4 | +4 | +3 | +2 | +1 |  |

FIG. 10

Seam line

| ··· pi··· | p3 | p2 | p1 | p0 | q0 | q1 | q2 | q3 | ··· qi··· |
|---|---|---|---|---|---|---|---|---|---|
| ··· pi··· | 254 | 250 | 253 | 255 | 0 | 5 | 4 | 6 | ··· qi··· |
|  | -122 | -123 | -124 | -125 | +125 | +124 | +123 | +122 |  |

FIG. 11

FIG. 12

FIG. 13

FIG. 14

# INTERNATIONAL SEARCH REPORT

| International application No. |
|---|
| PCT/CN2010/080053 |

**A. CLASSIFICATION OF SUBJECT MATTER**

See extra sheet
According to International Patent Classification (IPC) or to both national classification and IPC

**B. FIELDS SEARCHED**

Minimum documentation searched (classification system followed by classification symbols)

IPC: H04N; G06T

Documentation searched other than minimum documentation to the extent that such documents are included in the fields searched

Electronic data base consulted during the international search (name of data base and, where practicable, search terms used)

WPI; EPODOC; VEN; CNPAT; CNKI; VCN: image, photo, picture, scene, splice, synthesize, spatial, space, homographic, matrix, mapping, vector

**C. DOCUMENTS CONSIDERED TO BE RELEVANT**

| Category* | Citation of document, with indication, where appropriate, of the relevant passages | Relevant to claim No. |
|---|---|---|
| A | WO2006055228A1 (HEWLETT-PACKARD DEVELOPMENT COMPANY, L.P.) 26 May 2006(26.05.2006) the whole document | 1-16 |
| A | CN101299270A(UNIV SOUTHEAST) 05 November 2008(05.11.2008) the whole document | 1-16 |
| A | CN101365140A(UNIV ZHEJIANG) 11 February 2009(11.02.2009) the whole document | 1-16 |
| PX | CN101710932A(HUAWEI DEVICE CO.,LTD) 19 May 2010(19.05.2010) the whole document | 1-16 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March 2011(02.03.2011) | **24 Mar. 2011 (24.03.2011)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WANG, Wei** Telephone No. (86-10)62411506 |
|---|---|

Form PCT/ISA /210 (second sheet) (July 2009)

## INTERNATIONAL SEARCH REPORT
### Information on patent family members

| | | International application No. |
|---|---|---|
| | | PCT/CN2010/080053 |

| Patent Documents referred in the Report | Publication Date | Patent Family | Publication Date |
|---|---|---|---|
| WO2006055228A1 | 26.05.2006 | US2006104541A1 | 18.05.2006 |
| | | EP1813105A1 | 01.08.2007 |
| | | KR20070086202A | 27.08.2007 |
| | | KR100893463B1 | 17.04.2009 |
| | | US7619658B2 | 17.11.2009 |
| | | EP1813105B1 | 20.01.2010 |
| CN101299270A | 05.11.2008 | CN101299270B | 02.06.2010 |
| CN101365140A | 11.02.2009 | CN100588269C | 03.02.2010 |
| CN101710932A | 19.05.2010 | NONE | |

Form PCT/ISA /210 (patent family annex) (July 2009)

# INTERNATIONAL SEARCH REPORT

International application No.

PCT/CN2010/080053

**A. CLASSIFICATION OF SUBJECT MATTER**

G06T7/00 (2006.01) i
H04N5/262 (2006.01) i

Form PCT/ISA /210 (extra sheet) (July 2009)

**EP 2 518 688 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910247061